Europäisches Patentamt

European Patent Office

Office européen des brevets

(11) Publication number: **0 184 938**
**B1**

## (12) EUROPEAN PATENT SPECIFICATION

(45) Date of publication of patent specification: **28.03.90**

(21) Application number: **85309037.1**

(22) Date of filing: **12.12.85**

(51) Int. Cl.⁵: **F 04 C 2/107**

(54) **Wave pump assembly.**

(30) Priority: **12.12.84 US 680971**
**10.01.85 US 690319**

(43) Date of publication of application:
**18.06.86 Bulletin 86/25**

(45) Publication of the grant of the patent:
**28.03.90 Bulletin 90/13**

(84) Designated Contracting States:
**AT BE CH DE FR GB IT LI LU NL SE**

(56) References cited:
**EP-A-0 037 294**
**FR-A-1 351 597**
**FR-A-2 143 500**
**US-A-4 405 239**
**US-A-4 519 712**

(73) Proprietor: **Barr, Robert A.**
**650 South Atlantic Avenue**
**Virginia Beach Virginia (US)**

(72) Inventor: **Barr, Robert A.**
**650 South Atlantic Avenue**
**Virginia Beach Virginia (US)**

(74) Representative: **Blanco White, Henry Nicholas et al**
**ABEL & IMRAY Northumberland House 303-306 High Holborn**
**London WC1V 7LH (GB)**

Courier Press, Leamington Spa, England.

## Description

The present invention relates in general to pumping devices for pumping liquid or gaseous or plastic fluids or mixtures of solids and gaseous or liquid fluids, and more particularly to wave pump assemblies having a rotor member in the form of a helix with smooth, rounded threads and means activated by the helix to generate a continuous wave motion providing longitudinally moving pockets for moving the medium to be pumped.

The invention also relates to extruder screw assemblies for extruding polymers and the like, and more particularly to an extruder screw and positive displacement wave pump structure for extruding plastics and the like.

Heretofore, various pumping devices have been proposed to effect pumping of a medium, such as liquid or gaseous fluids of various types, by a pump structure involving a helical rotor, usually having rounded helical threads, and a stator also providing a bore which is of rounded helical configuration having a different pitch from the helical rotor, providing pumping pockets which progress longitudinally from the input end to the output end of the pump. A number of such pump devices have been developed and marketed by Robins & Myers Inc. of Springfield, Ohio, under the name Moyno gear pumps, involving principles of pump structure disclosed in various U.S. patents to R.J.L. Moineau. Examples of these patents are U.S. Patents Nos. 1,892,217 and 2,028,407.

However, certain disadvantages have been identified as an inherent property of that type of construction. With the Moineau type pump, either the rotor or the stator must be free to orbit around the center of rotation of the input drive shaft or other driving mechanism. This is because of the nature of the Moineau type pump wherein the confronting surfaces of the rotor and stator are rounded helical thread configurations of different pitch providing pumping pockets which progress longitudinally from the input to the output end of the positive displacement pump mechanism. Because of the necessity of enabling either the rotor or the stator, usually the rotor, to orbit around the center of rotation of the input shaft, a rather complex coupling must be provided between the drive shaft and the input end of the rotor of the pump mechanism to allow this relative movement of the center of rotation of the pump rotor relative to the center of rotation of the drive shaft.

An object of the present invention is the provision of a novel positive displacement pump assembly employing a helical rotor with smooth rounded helical threads, which eliminates the need for a coupling to accommodate orbiting of the pump rotor, and provides for greater capacity for a given rotor length and thread pitch than Moineau type pumps, and provides continuous and positive displacement pumping of the fluid or other flow medium by generating a continuous wave motion providing volume displacement which is utilized more efficiently to pump the medium.

Employment of a screw or the like in an extruder for working wide ranges of solid, plastic material into a substantially homogeneous molten state suitable for formation into any desired shape by extrusion or injection into a die or mould has become well known.

Extrusion, injection moulding or blow moulding with a single screw extruder includes feeding the solid polymeric or plastics material in pellet, chip, powder, or flake form to the feed end of the extruder through a hopper mounted on an opening of a heated barrel in which a screw is rotatably mounted. The screw has at least one helical thread with a minimum clearance to the barrel, integrally formed on the core to create a helical channel, along which the plastics material is moved downstream from the feed end to the discharge end by forces exerted by the rotation of the screw. The solid plastics material fed into the screw channel is compacted into a solid plug or solid bed and the solid bed melts as it travels down the screw channel. The molten plastics material is collected by the wiping action of the thread into a melt pool. The melt pool gradually increases as the solid bed gradually melts, eventually occupying the entire screw channel.

Molten plastics materials have a very high viscosity and a large amount of heat is generated in the melt pool due to shearing of the melt pool by the rotation of the screw. Thus, the melt pool becomes hotter as it travels down the screw channel and often becomes undesirably hot by the time it reaches the discharge end. Heat transfer from the melt pool to the solid bed is inefficient because of the low thermal conductivity of plastics materials and the limited contact area between the melt pool and the solid bed. Increased heat transfer from the hot, molten plastics material in the melt pool to the cold, solid plastics material in the solid bed is highly desirable in order to reduce the temperature of the molten plastic material discharged from the extruder, increase melting capacity of the extruder and the increase energy efficiency of the extrusion process.

Examples of extruder screws which have come into substantial use for working plastic material and feeding it by extrusion or injection into a die or mould are found in Robert A. Barr, U.S. Patent No. 3,698,541, Chan I. Chung, U.S. Patent No. 4,000,884, and more recently an energy efficient extruder screw disclosed in Chung and Barr, U.S. Patent No. 4,405,239. These can be broadly described as a screw having a first or main screw thread and a second screw thread which divides the screw channel into a pair of side by side subchannels of equal width. The diameter of the second thread is sufficiently smaller than the diameter of the barrel that its clearance to the barrel allows the plastics material to flow over the second thread. The depths of the two side-by-side sub-channels vary continuously and oppositely along the length of the passages so that the combined passage cross-sectional area of the two sub-channels is maintained constant. As one sub-channel becomes smaller in depth with diminishing cross-sectional area, the other sub-channel becomes deeper correspondingly with enlarging cross-sectional area, so that the plastic material is forced to move from the diminishing sub-channel into the enlarging sub-channel, flowing over the second thread. The second thread gives shear to the plastics material while the material is flowing over it. Such a mechanism of moving the plastics material from one sub-channel into the other sub-channel is repeated a number of times.

It is well known in the plastics and rubber industries that such a single-screw type of extruder is not a positive displacement device. This means that the restriction to flow downstream of the extruder which creates high pressure at the extruder outlet reduces the pumping rate of the extruder. To obtain higher rates, it is then necessary to run the extruder at higher revolutions per minute. This has the disadvantage of raising the temperature of the extruder, owing to the increasing shear, eventually beyond what is tolerable to the process.

It has been known in the industry that the pressure on the extruder can be reduced to very low levels by using a positive displacement pump, such as a gear pump, between the extruder and process die. Driven separately, this is able to pump against very severe flow restrictions, where high pressures occur, and yet provide very low pressure at the pump inlet, which is the extruder outlet, enabling the extruder to perform at much higher revolution rates. However, the gear pump drive system and the in-line space it takes up make it an expensive and troublesome addition and a real problem to add to existing lines.

FR-A-1 351 597 and US-A-3 233 553 disclose a wave pump assembly for pumping fluids, comprising a positive displacement wave pump located in a barrel between an upstream end and an outlet end of the barrel, wherein the said pump has a helical rotor member that in operation is driven for rotation, a stack of slidable sealing discs in face to face contact with each other extending along the wave pump, and pins supporting the discs for reciprocative sliding movement parallel to a first diametric plane of the barrel, the sealing discs have opposite surface edge portions that are moved into sealing engagement with and withdrawn from confronting surface portions of the barrel by rotation of the rotor member, the discs have generally rectangular central apertures receiving the rotor member through them and accommodating the full stroke of movement of the helical rotor in a direction perpendicular to the first diametric plane, and the rotor and sealing discs and the confronting surface of the barrel forming a series of pumping pockets between the edge portions of the sealing discs and the surface of the barrel, which pumping pockets are moved longitudinally through the pump to force the fluid medium to move toward the discharge end of the pump.

The invention provides a wave pump assembly for pumping fluid medium comprising gaseous or liquid fluids or mixtures thereof with solids or the like, comprising a barrel having an upstream end and an outlet end, and a positive displacement wave pump in the bore located between the said upstream end and the said outlet end, wherein the said pump has a rotor member having a helically contoured outer surface defining a plural-turn helical thread formation of wide rounded form to orbit about a central axis, means arranged in operation to drive the rotor member for rotation, a slide disc stack of a plurality of slidable sealing discs in face to face contact with each other extending along the wave pump, and means supporting the discs for reciprocative sliding movement parallel to a first diametric plane of the barrel, the barrel having confronting surface portions facing the discs along the extent of the slide disc stack, the slide discs forming sealing discs having opposite surface edge portions to be moved towards the confronting surface portions of the barrel into sealing engagement therewith and be withdrawn to a range of positions spaced from the said surface portions of the barrel towards the central axis by the rotor member upon rotation of the latter, the discs having shaped central apertures receiving the rotor member through them and accommodating movement of the full diametric range of movement of the crests of the said helical thread formation in a second diametric direction perpendicular to the said first diametric plane, and the rotor and sealing slide discs and the confronting surface of the barrel forming a series of pumping pockets between the convex outer edge portions of the sealing discs and the surface of the barrel which pumping pockets in normal operation are moved longitudinally through the pump to force the fluid medium to move toward the discharge end of the positive-displacement wave-pump, characterised in that the spaces between the rotor and the surfaces of the said central apertures of the discs form further pumping pockets which in normal operation are moved longitudinally through the pump to force the fluid medium to move through the said apertures towards the said discharge end.

The barrel preferably defines an elongate cylindrical bore, the wave pump then preferably having a stator frame provided with cylindrical outer surface portions engaging and conforming to the surface of the cylindrical bore, the rotor being arranged for rotation in the stator frame.

The means supporting the discs may include a pair of diametrically opposite side frame portions of the stator frame joining an inlet portion and extending substantially the axial length of the slide disc stack spaced transversely from the axis of the bore in the said second diametric direction and having inwardly facing guide surfaces in sliding contact with the slide discs to confine movement of the slide discs to reciprocative movement parallel to the said first diametric plane, and wherein the slide disc stack extends a major portion of the axial length of the stator frame. The said guide surfaces of the said side frame portions are advantageously flat surfaces lying in a pair of planes paralleling the said first diametric plane and the said slidable sealing discs are in the shape of thin truncated circular discs each having a pair of opposite flat edge portions extending along chords of the notional circles defining the disc equally spaced from the centre of the disc and positioned in sliding contact with the guide surfaces of the said frame portions to be guided thereby.

The stator frame may have a cylindrical upstream end portion including a pair of opposite circumferential interruptions in the outer portion thereof in the direction of the said first diametric plane defining passages for admitting the fluid medium into the pocket formations defined between the outer curved edge portions of the discs and the confronting surface of the bore and having an upstream facing bevelled throat and passages therefrom communicating with spaces between the central apertures of the discs and the helically contoured outer surface of the rotor member in the said second diametric direction for passage of the fluid medium through the portions of the central apertures of the discs not in sealing contact with the contoured outer surface of the rotor member.

The assembly may comprise drive shaft means journaled for rotation in the bore, the means arranged to drive the rotor member comprising means coupling the rotor member to the discharge end portion of the drive shaft to be driven thereby.

The invention also provides a screw extruder assembly for plasticating or melting solid plastics material or plastic material or the like, comprising a wave pump assembly according to the invention and a screw rotatably housed in an upstream portion of the bore having a feed end and a discharge end, the said screw having a section between the feed end and discharge end thereof comprising at least one helical thread having plural turns integral with the core of the screw, the said thread originating at the feed end of the screw creating a helical channel in the space between successive turns of the thread and having a minimum clearance to the surface of the bore to feed the plastic material along the screw from the feed end to the discharge end, the positive displacement wave pump being located between the discharge end of the screw and the outlet end of the bore.

The rotor member of the wave pump may then include an axially short cylindrical upstream end portion to be removably assembled to the discharge end of the screw and having a downstream end portion of smaller diametric size than the diameter of the helically contoured rotor portion. The said cylindrical upstream end portion is advantageously provided with an internally threaded socket formation opening through the upstream end thereof, the discharge end of the said screw is provided with an externally threaded end portion sized to interfit and be threadedly coupled in the said threaded socket of the rotor member, and a downstream end portion of the rotor member is of non-round cross-sectional configuration for receiving a similarly shaped tool portion for manually assembling and disassembling the rotor member with the screw.

The said helical thread of the screw may comprise at least one pair of substantially parallel, helical, first and second threads integral with the core of the screw, the first thread of the pair originating at the feed end of the screw creating a helical channel and having a minimum clearance to the surface of the bore, the second thread of the pair originating at a location about one third to two thirds of the length of the screw from the feed end of the screw by rising from the core of the screw and having a larger clearance to the surface of the bore, the second thread of the pair dividing the helical channel created by the first thread into two sub-channels of substantially equal width, one located toward the feed end of the screw from the second thread and the other located toward the discharge end of the screw from the second thread, the depth of the sub-channel located toward the feed end gradually increasing to a maximum comparable to the depth of the helical channel at the feed end of the screw accompanied by gradual decrease of the depth of the other sub-channel to a minimum. The clearance from the second thread of the pair to the surface of the bore is then preferably comparable to or greater than the size of the components of a solid plastic material that is to be extruded, and the minimum depth of the said other sub-channel is preferably comparable to or greater than the size of the components of a solid plastic material that is to be extruded, using the assembly.

The invention also provides a method of pumping a fluid medium using a wave pump assembly according to the invention, and a method of plasticating or melting, and/or extruding, a solid, plastic material or a solid plastics material using a screw extruder assembly according to the invention, and especially such a method using a screw extruder assembly as last described in which the clearance from the second thread of the said pair of threads of the screw to the wall of the bore is comparable to or larger than the size of the components of the material and the minimum depth of the said other sub-channel is comparable to or larger than the size of the components of the material.

Various forms of wave pump assembly and screw extruder assembly constructed in accordance with the invention will now be described by way of example only with reference to the accompanying drawings, in which:

Figure 1 is a somewhat schematic side elevational view of one form of extruder screw;

Figure 2 is a somewhat diagramatic side elevational view, to larger scale than Figure 1, of part of a screw extruder assembly, showing the discharge end of the screw and one form of positive displacement wave pump, with the barrel cut away;

Figure 3 is a fragmentary top plan view of the parts of the assembly shown in Figure 2, with the barrel cut away;

Figure 4 is a vertical cross-section taken at the inlet end of the pump along the line 4-4 of Figure 2;

Figure 5 is a vertical cross-section taken at the outlet end of the pump along the line 5-5 of Figure 2;

Figure 6 is a vertical longitudinal sectional view, taken along the line 6-6 of Figure 4;

Figure 7 is a horizontal longitudinal sectional view taken along the line 7-7 of Figure 4;

Figures 8A, 8B and 8C are vertical cross-sections taken along the lines A-A, B-B, and C-C of Figure 6, showing positions of the rotor and slide discs of the disc pack at the sectional positions indicated;

Figure 9 is a somewhat diagramatic side elevational view of a second form of positive displacement wave pump assembly, with the barrel cut away;

Figure 10 is a top plan view of the wave pump assembly shown in Figure 9, with the barrel cut away;

Figure 11 is a vertical cross-section taken at the inlet end of the wave pump along the line 3-3 of Figure 9;

Figures 12A, 12B, and 12C are vertical cross-sections taken along the lines 12A-12A, 12B-12B, and 12C-12C of Figure 9, respectively, showing positions of the rotor and slide discs of the disc pack at the sectional positions indicated;

Figure 13 is a horizontal longitudinal sectional view taken along the line 13-13 of Figure 9; and

Figure 14 is a vertical longitudinal sectional view taken along the line 14-14 of Figure 11.

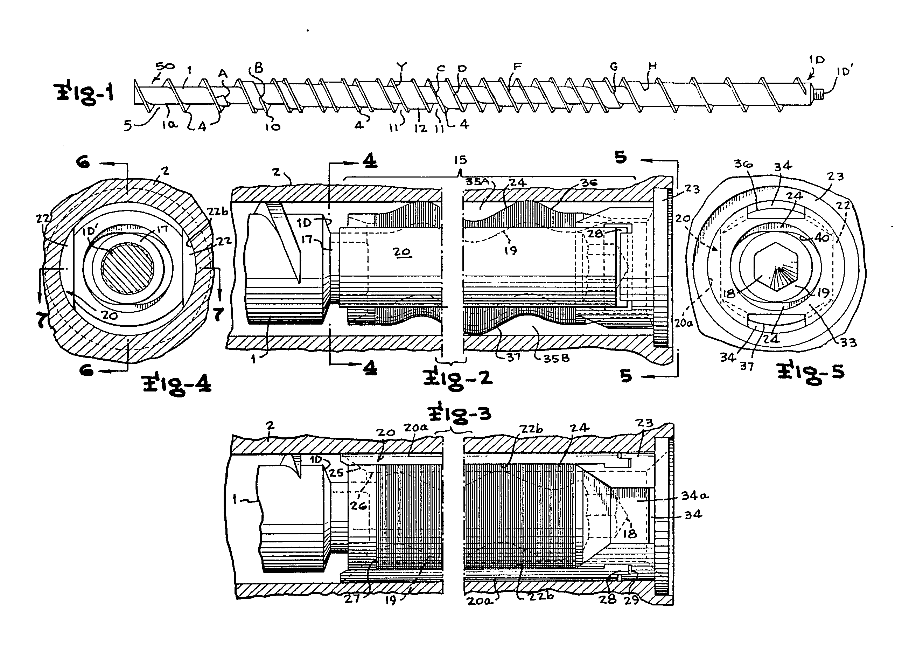

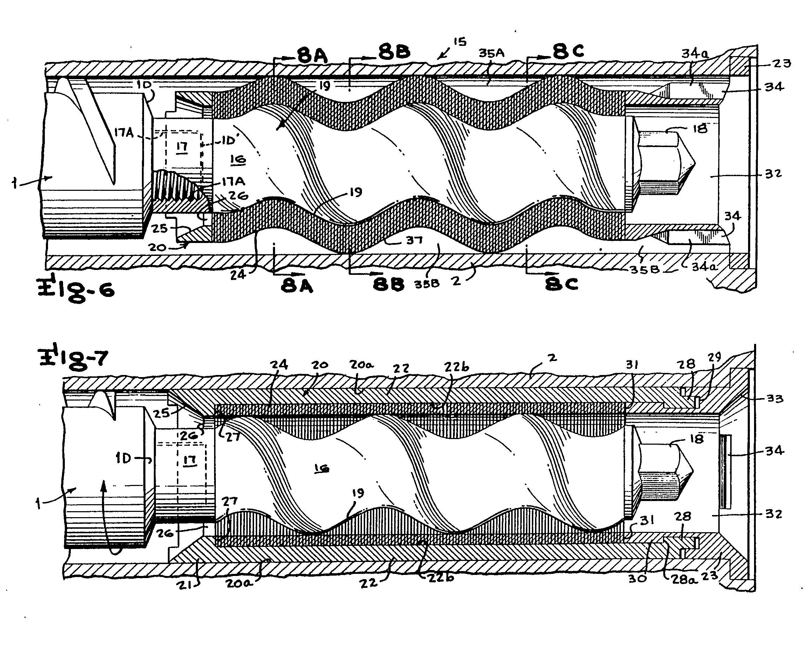

Referring to the accompanying drawings, wherein like reference characters designate corresponding parts throughout the several figures and initially to Figures 1 to 8, one form of screw extruder and positive displacement pump assembly according to the present invention includes a cylindrical barrel 2 of the extruder having a single screw extruder 1, which may have the specific construction of a number of extruder screws, such as the extruder screw disclosed in United States Patent No. 4,000,884 (Chung), or United States Patent No. 3,698,541 (Barr), or United States Patent No. 3,858,856 (Hsu) or other known commerial extruder screws, but will be described as an extruder screw as disclosed in U.S. Patent No. 4,405,239 in the present example. In the screw extruder assembly, the outlet end portion of the extruder screw 1 is coupled, by a structure described below, to a positive displacement pump structure indicated by the reference numeral 15 occupying a zone of the cylindrical barrel 2 adjacent to the outlet end. The extruder screw 1 has at least one helical thread 4 with a minimum clearance to the barrel 2 integrally mounted or formed on its core 1a. The thread 4 creates a helical channel 5 extending around the core 1a of the screw 1. The number of turns of thread 4 around the core 1a will be called hereinafter, "turns" for brevity. The axial distance between one turn of thread 4 is called "pitch".

A solid plastics material, or a mixture of materials, in pellets, chip, powder or flake form is fed into the channel 5 through a hopper (not shown) and travels down the channel 5 propelled by forces exerted by rotation of the screw 1. At a point A, a short distance from the feed end of the screw 1, a portion of the width of the channel 5 toward the feed end starts gradually to decrease its depth while the remaining portion of the width of the channel, toward the discharge end, starts gradually to increase its depth. A second thread 10, which is substantially parallel to the thread 4, originates at a point B downstream of the point A, rising from the floor of the channel 5 and divides the channel into two sub-channels, a front sub-channel 11 and a back sub-channel 12. The second thread 10 has a larger clearance to the barrel 2 than does the first thread 4, the larger clearance being comparable to but not less than the depth of the front channel portion at the point B.

The second thread 10 converts to become the thread 4 (that is to say, the thread with a minimum clearance to the barrel) at C while the thread 4 converts to become the second thread 10 (that is to say, the thread with a larger clearance to the barrel) at D which is located on the thread 4 substantially levelwith and adjoining C towards the discharge end. The maximum depth of the front sub-channel 11 is maintained between C and E which is located at about one half to one turn, preferably, about one turn, toward the discharge end from C. The structural features between B and D are repeated between D and a further point F in substantially the same way, causing a major portion of the plastic material, both solid and molten, collected in the front sub-channel 11, to move back into the back sub-channel 12 again by the forces exerted by the rotation of screw 1. The movement of the plastic material from one sub-channel to the other over the second thread 10 is always in the direction opposite to the direction of the general movement along the screw 1 from the feed end to the discharge end. That requires a high pressure buildup in whichever sub-channel is delivering material to the other, and the high pressure can cause undesirable heat-buildup and reduction in the pumping capacity of the screw 1. The structural features between B and D may be repeated in substantially the same way as many times as desired between the point F and a further point G at which the second thread 10 terminates. The depths of the front sub-channel 11 and the back sub-channel 12 and the clearance of the second thread 10 may be different from those used between B and D in each repeat cycle in order to achieve the optimum mixing and melting functions of the screw 1. The front sub-channel 11 and the back sub-channel 12 merge to become a single channel by gradually changing their depths to a common depth at a point H which is located about one half to one turn towards the discharge end from the point G. Instead, the second thread 10 may be present between the points G and H, terminating at the point H. The depth of the channel 5 is usually kept constant from the point H to the discharge end of the screw 1.

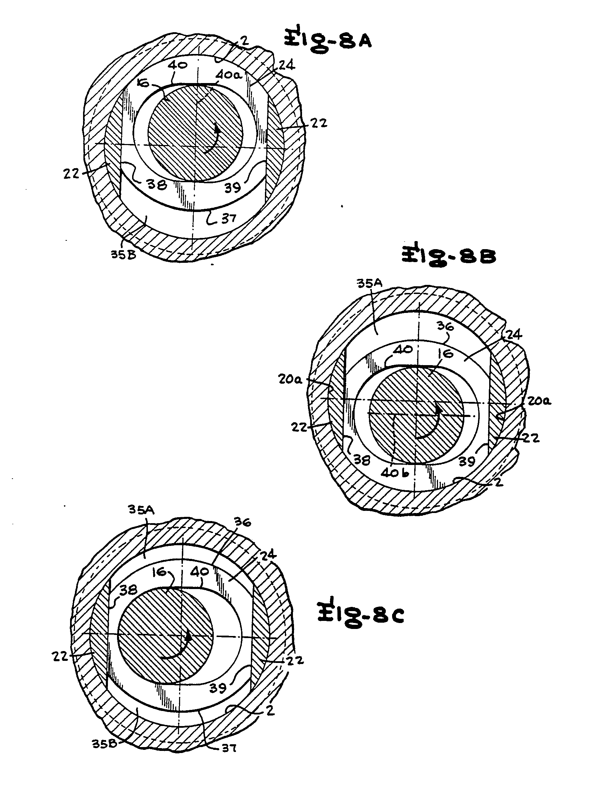

The positive displacement wave pump 15 is coupled to the discharge end 1D of the extruder screw 1 by simply threading the upstream end of a rotor member 16 of the wave pump to the downstream end of the extruder screw. The positive displacement wave pump 15 comprises a rotatable internal element forming the rotor 16, the outer exterior surface of which includes a cylindrical upstream end portion 17 having a hollow cavity 17A which is internally threaded and is assembled onto a correspondingly externally threaded discharge·end formation 1D' on the extruder screw 1 to permit the rotor to be assembled to and disassembled from the extruder screw by conventional screw threading techniques. A downstream end portion 18 of the rotor 16 is of smaller diameter than the upstream end portion 17 and is of hexagonal configuration, as is best shown in Figures 6 and 7, to receive a hex socket wrench or similar tool to facilitate removal of the rotor 16 from the extruder screw section 1 when desired.

The portions of the rotor 16 between the cylindrical upstream end portion 17 and the hexagonal downstream smaller cross-section end portion 18 form a helically contoured section 19 similar to the configuration of the exterior surface of the rotor of a Moyno gear pump of the types produced commercially by Robbins & Myers, Inc. and embodying the principles disclosed in U.S. patents to R.J.L. Moineau, such as U.S. Patents Nos. 1,892,217 and 2,028,407. The helically contoured outer surface of the helical rotor portion 19 defines what may be described as helical threads of wide, rounded form forming a plurality of rounded helical threads or turns orbiting about an axis that is a notional extension of the central axis of the extruder screw 1 and is the central axis of the inlet cylindrical rotor portion 17 and of the downstream end portion 18. A stator frame assembly indicated generally by the reference numeral 20 spans most of the axial length of the rotor 16, and includes a first frame member having an inlet portion 21 and a side frame portion 22 integrally joined together and an outlet end member 23 collectively outwardly surrounding the rotor 16 and capturing a stack of slide discs 24 forming sealing discs and shown most clearly in Figures 2, 3, 6, 7, and 8A to 8C.

The stator frame member 20 has a cylindrical outer perimeter 20a along the two horizontally opposite lateral portions thereof over the span of the inlet portion 21, the side frame portions 22 and the outlet end member 23, conforming to the inner diameter of the cylindrical confronting surface of the barrel or bore of the extruder tube 2, to fit tightly against the confronting surface of the extruder barrel or bore and be fixed thereagainst by any suitable means. As will be apparent particularly from Figures 2, 3, 6, and 7, the inlet end portion of the stator frame member 20 has a beveled or chamfered throat 25 forming a truncated conical surface coaxial with the rotor 16 and converging downstream to join a cylindrical inlet passage portion 26 which extends to a shoulder formation 27 forming an upstream bearing shoulder for the stack of slide discs 24.

The opposite side frame portions 22 of the stator frame member 20 extending from the inlet portion 21 to the outlet end member 23 have a cylindrical outer or exterior surface 20a and a flat or rectilinear inner surface 22b defining guide surfaces for opposite lateral edges or flats of the slide discs 24 limiting them to rectilinear reciprocative sliding movement parallel to the vertical direction (as seen in the drawings) only.

The downstream end of the slide frame portion 22 of the stator frame member 20 has an annular tongue formation 28 which fits a correspondingly shaped groove formation 29 in the outlet end member 23 to couple together the outlet end member and the stator frame portions 22. The upstream end portion of the outlet end member 23 provides an axially elongate annular lip or flange formation 30 with a downstream-facing shoulder that abuts a transition shoulder portion 28a of the annular tongue formation 28 and provides an upstream annular shoulder face 31 confronting the slide disc 24 at the downstream end of the pack of slide discs, coactive with the shoulder formation 27 of the inlet portion 21 to capture the stack of slide discs 24 therebetween.

As will be seen particularly from Figs. 6 and 7, the outlet member 23 has a cylindrical bore portion 32 coaxial with the rotor 16 and with a diameter equal to the length of the major axis of the elliptical or oblong central opening of the slide discs 24 as later described, which merges into an outwardly beveled or flared frustoconical surface portion 33 forming the discharge or outlet opening for the extruder. Diametrically opposite portions of this beveled surface 33 are provided with openings 34 communicating with passages 34a at the top and bottom of the intermediate regions of the body of the outlet end member 23 which open in an upstream direction to spaces 35A and 35B above and below, respectively, cylindrically curved arcuate upper and lower edge portions 36 and 37 of the discs 24.

As will be apparent from Figs. 8A-8C, all of the discs 24 are of identical configuration. The outer edge of each disc 24 is in the shape of a twice interrupted or truncated circular or cylindrical shape, being interrupted by two symmetrically diametrically opposite flats or straight edge sections 38 and 39 along chords of the circle in which the upper and lower arcuate cylindrical edges 36 and 37 lie, providing parallel vertically extending straight edge surfaces 38 and 39 which slidably bear against confronting surfaces of the side frame portions 22 of the stator frame member 20.

Thus the stator frame member 20 maintains the pack of sealing discs 24 in a face-to-face contacting stacked array of discs capable of freely sliding vertically relative to each other along a vertical axis through the centre of the barrel or bore 2 of the extruder paralleling the planes of the vertical flats or straight edges 38 and 39. The central opening 40 of each of the discs 24 is in the form of a laterally elongate oval having a vertical minor axis 40a and a horizontal major axis 40b to accommodate the maximum lateral span of the crests of the rounded helical threads of the rotor 16. The dimension of the minor axis 40a corresponds exactly to the diameter of the rotor 16 in the cylindrical portions thereof and the diameter of any circular cross-section of the helical thread portion thereof, so that the discs 24 are shifted vertically up and down relative to each other to provide wave patterns resembling what is illustrated in Figures 2 and 6, providing pumping pockets which progress longitudinally from the inlet end to the outlet or discharge end of the wave pump section as the helically threaded rotor 16 is rotated by the extruder screw section 1.

By the above described construction, wherein the positive displacement wave pump section 15 is coupled to and driven by the extruder screw section 1, the plastic material being forced towards the discharge or delivery end of the extruder screw section 1 by the threads of the extruder screw flows into the passages or spaces lying outwardly of the outer periphery of the upstream inlet portion 21 of the stator frame member 20, between the inlet portion of the stator frame member and the confronting surface of the barrel 2 of the extruder, and thence into the spaces between the convex arcuate cylindrical edges 36 and 37 of the sealing slide discs 24 and the confronting surface of the barrel 2, and the material being extruded also flows into the throat 25 of the inlet end portion 21 of the stator frame member 20 and passes into the spaces occurring between the oval-shaped central openings 40 of the discs 24 at the outer regions of the major axis 40b thereof and the exterior surface of the circular cross-section rotor 16. Since the surfaces of the openings 40 of the discs 24 contact the exterior surface of the rotor 16 all along its length down the centre line of the pump, this contact creates a sealing line, preventing the polymer from leaking back so that it must move with the volume being displaced by the rotor shape as it rotates. Also, the convex arcuate curved outer surfaces 24a of the discs are positioned in a pattern and progressively brought into contact with the confronting surfaces of the barrel 2 to create a series of pumping pockets 35A and 35B between the outer convex edges 36 and 37 of the sealing discs 24 and the surface of the barrel 2, which pumping pockets are moved longitudinally through the pump forcing the polymer material to move towards the discharge end of the wave pump section.

Because of the design of the components of the positive displacement wave pump section, high pressure at the outlet end, which would normally be acting on the full disc area and would cause very high frictional forces between the discs, is relieved, since the configuration of the outlet member 23 is such that most of the projected area of the cross-section is covered by the outlet member 23 so that the pressure is transferred by the outlet member to the barrel 2. Conversely, the inlet portion 21 of the stator frame assembly 20 is designed to exert the full inlet pressure onto the discs 24 themselves thus counter-acting any pressure from the outlet end. Because of the construction, the inlet portion 21 of the stator frame assembly 20 is free to undergo some movement in the appropriate direction so that the inlet pressure is free to act on the discs 24.

The above described assembly of extruder screw section 1 and positive displacement wave pump section 15 provides an arrangement wherein neither the rotor nor the outer portion of the wave pump section has to be free to orbit, as would be the case in the use of a Moineau type pump arrangement, so that a flexible coupling is not required and the rotor can be rigidly attached to, and driven from, the discharge end portion 1D of the extruder screw member 1. Thus the axial length of the barrel 2 for the assembly with the wave pump section 15 can be reduced relative to a comparable assembly involving a Moineau pump since one does not need to allow for the length of the flexible coupling that would have been required in the Moineau pump type arrangement. A further advantage arises from the design of the present construction since some of the polymer passes into the spaces defined between the surfaces of the oval central openings 40 of the discs 24 and the exterior surface of the circular cross-section rotor 16, which effects a significant increase in pumping capacity due to the pumping action occurring between the helical surface of the rotor 16 and the bore defined by the oval central openings of the discs 24. This pumping of the polymer in the spaces defined between the rotor 16 and the discs 24 permits an increase of about 50 percent in the pumping capacity as well as achieving good lubrication of the contact points between the rotor surface and the surfaces of the disc openings 40 which see a lot of load.

With this arrangement, pressure on the extruder can be reduced to very low levels so that the extruder screw is able to pump against very severe flow restrictions and yet with very low pressure at the extruder outlet (the wave pump section inlet), enabling the extruder to perform at much higher rates per revolution of the screw. Thus the extruder screw head pressure is very low, the positive displacement wave pump providing the pumping force to overcome the downstream process restrictions to flow.

Also, the screw thread connection at 17A and 1D between the pump section 15 and the screw section 1 facilitates removal of the rotor to change it in the extruder for a different pitch rotor to change the pumping capacity. This is important since the exact capacity of the extruder screw can be different for different polymers and blends of polymers. If the inlet pressure is too high or too low the rotor can be readily changed without removing the extruder screw.

Referring now to Figures 9 to 14 of the accompanying drawings, the second form of positive displacement wave pump assembly is largely similar to that forming part of the extruder assembly shown in Figures 1 to 8 of the drawings. The wave pump 15 includes a helical rotor 16 the cylindrical upstream end portion 16a of which is coupled in any suitable manner to a drive shaft 17' that extends upstream coaxially with the barrel 2 of the wave pump assembly. In the arrangement shown in Figs. 9 to 14, the coupling between the rotor 16 and the drive shaft 17' is not a screw coupling, and the downstream end portion 18' of the rotor is provided not with a hex formation but with an axial short cylindrical portion terminating in a tapered conical end surface.

The portion of the rotor 16 between the cylindrical upstream end portion 16A and the downstream end portion 18' forms a helically contoured section 19 similar to that shown in Figures 1 to 8. A stator frame assembly 20 spans most of the axial length of the wave pump rotor 16, and includes a first frame member having an inlet portion 21 and a side frame portion 22 integrally joined together and an outlet end portion 23 collectively outwardly surrounding the rotor 16 and capturing a stack of slide discs 24 forming sealing discs.

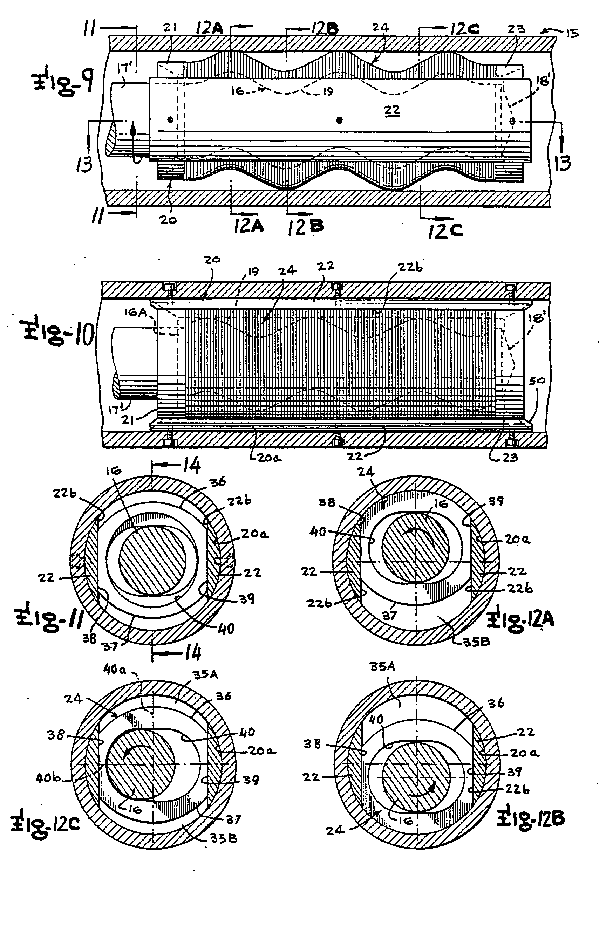

The stator frame member 20 has a cylindrical outer perimeter 20a along the two horizontally opposite lateral portions thereof over the span of the inlet portion 21, side frame portions 22 and outlet end portion 23, conforming to the inner diameter of the cylindrical confronting surface of the barrel 2 to fit tightly against the confronting surface of the housing barrel or bore and be fixed there against by any suitable means such as the screws shown in Figures 10 and 11. As is most clearly shown in Figures 13 and 14, the inlet end portion of the stator frame member 20 has a beveled or chamfered throat 25 forming a frustoconical surface coaxial with the rotor 16 converging to join a cylindrical inlet passage portion 26 which extends through a shoulder formation 27 forming the upstream bearing shoulder for the stack of slide discs 24.

The opposite side frame portions 22 of the stator frame member 20 extending from the inlet portion 21 to the outlet end portion 23 have a cylindrical outer or exterior surface 20a and a flat inner surface 22b defining guide surfaces for the opposite lateral edges or flats of the slide discs 24 limiting them to rectilinear reciprocative sliding movement in a first diametric direction of the cylindrical bore 2, the vertical direction as shown in the drawings.

The downstream end of the slide frame portion 22 of the stator frame member 20 provides an upstream annular shoulder face 31' confronting the slide disc 24 at the downstream end of the pack of slide discs, coactive with the shoulder formation 27 of the inlet portion 21 to capture the stack of slide discs 24 therebetween.

As is shown most clearly in Figures 13 and 14. The outlet member 23 has a cylindrical bore portion 49 axial with the rotor 16 which merges into an outwardly beveled or flared frustoconical surface portion 50 forming the discharge or outlet opening for the assembly. Diametrically opposite portions of this beveled surface 50 are provided with passages 51 communicating with the downstream ends of the spaces 35A and 35B above and below, respectively, the cylindrically curved arcuate upper and lower edge portions 36 and 37 of the discs 24 at vertically diametrically opposite portions of the outlet end portion 23.

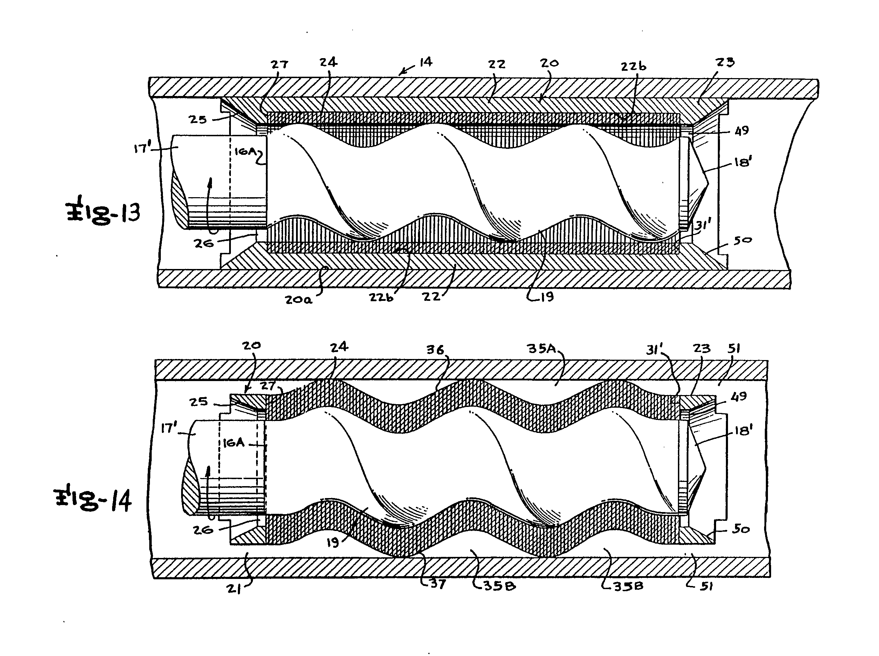

As will be apparent from Figs. 12A to 12C, the discs 24 are of identical configuration. Each disc 24 is bounded by two circular arcs 36 and 37 and two straight lines 38 and 39 to give a symmetrical shape. Each of the arcuate edges 36 and 37 is configured to fit exactly against the wall of the bore 2, but they are closer together than the distance between opposite sides of the bore. The straight edges 38 and 39 are so spaced that the disc 24 fits snugly between the side frame portions of the stator frame member 20. The stator frame member 20 maintains the pack of sealing discs 24 in a face-to-face contacting stacked array of discs each capable of freely sliding vertically relative to the others in the vertical direction, but prevented from rotating or moving in any other direction. Each of the discs 24 has a central opening 40 in the form of a laterally elongate oblong having a vertical minor axis 40a and a horizontal major axis 40b. The central opening 40 of each disc 24 is bounded by two semi-circular arcs configured to fit closely the helical rotor 16 and two parallel straight lines each of which is tangential to both arcs. The dimension of the major axis 40b of the oblong opening 40 is sufficient to accommodate the maximum lateral span over the crests of the rounded helical threads of the rotor 16. The dimension of the minor axis 40a corresponds exactly to the diameter of the rotor 16 in the cylindrical portions thereof and the diameter of any circular cross-section of the helical thread portion thereof, so that the discs 24 are shifted vertically up and down relative to each other to provide wave patterns resembling what is illustrated in Figures 9 and 14 providing pumping pockets 35A and 35B which progress longitudinally from the inlet end to the outer or discharge end of the wave pump section as the helically threaded rotor 16 is rotated by the drive shaft 17.

By the above described construction a fluid medium being fed to the inlet end flows into the passages or spaces lying outwardly of the outer periphery of the upstream inlet portion 21 of the stator frame member 20 and thence into the spaces between the convex arcuate cylindrical edges 36 and 37 of the sealing slide discs 24 and the confronting surface of the barrel 2, and the fluid medium also flows into the throat 25 of the inlet end portion 21 of the stator frame member 20 and passes into the spaces occurring between the central openings 40 of the discs 24 at the outer regions of the major axis 40b thereof and the exterior surface of the circular cross-section rotor 16. Since the surfaces of the central openings 40 of the discs 24 contact the exterior surface of the rotor 16 all along its length along the top and bottom of the rotor, and round the side of the rotor at positions such as that shown in Figure 12C where the rotor is against one end of an opening 40, this contact creates a sealing line, preventing the fluid medium from leaking back so that it must move with the volume being displaced by the rotor shape as it rotates. Also, the convex arcuate curved outer surfaces 36 and 37 of the discs are positioned in a pattern and progressively brought into contact with the confronting surfaces of the barrel 2 to create a series of pumping pockets 35A and 35B between the outer convex edges 24a of the sealing discs 24 and the surface of the barrel, which pumping pockets are moved longitudinally through the pump forcing the fluid medium material to move towards the discharge end of the positive displacement wave pump.

Because of the design of the components of the positive displacement wave pump, high pressure at the outlet end, which would normally be acting on the full disc area and would cause very high frictional forces between the discs, is relieved, since the configuration of the outlet member 23 is such that most of the projected area of the cross-section is transferred by the outlet member 23 to the barrel. Conversely, the inlet portion 21 of the stator frame assembly 20 is designed to exert the full inlet pressure onto the disks themselves thus counteracting any pressure from the outlet end. Because of the construction, the inlet portion 21 of the stator frame assembly 20 is free to undergo some movement in the appropriate direction so that the inlet pressure is free to act on the discs 24.

The above described positive displacement wave pump provides an arrangement wherein neither the rotor nor the outer portion of the wave pump have to be free to orbit, as would be the case in the use of a Moineau type pump arrangement, so that no coupling is required and the rotor can be rigidly attached to the end portion of a drive shaft 17' rotating about a fixed axis. Thus because of the design of the present construction, some of the fluid medium being pumped passes into the spaces defined between the surfaces of the oval center openings 40 of the discs 24 and the exterior surface of the circular cross-section rotor 16, which effects a significant increase in pumping capacity due to the pumping action occurring between the helical surface of the rotor 16 and the bore of the discs 24 defined by their oval center opening. This pumping of the fluid medium in the spaces defined between the rotor 16 and the bore of the discs 24 permits an increase of about 50 percent in the pumping capacity as well as achieving good lubrication of the contact points between the rotor surface and the surfaces of the disc openings 40 which see a lot of load.

## Claims

1. A wave pump assembly for pumping fluid medium comprising gaseous or liquid fluids or mixtures thereof with solids or the like, comprising a barrel having an upstream end and an outlet end, and a positive displacement wave pump in the bore located between the said upstream end and the said outlet end, wherein the said pump has a rotor member having a helically contoured outer surface defining a plural-turn helical thread formation of wide rounded form to orbit about a central axis, means arranged in operation to drive the rotor member for rotation, a slide disc stack of a plurality of slidable sealing discs in face to face contact with each other extending along the wave pump, and means supporting the discs for reciprocative sliding movement parallel to a first diametric plane of the barrel, the barrel having confronting surface portions facing the discs along the extent of the slide disc stack, the slide discs forming sealing discs having opposite surface edge portions to be moved towards the confronting surface portions of the barrel into sealing engagement therewith and be withdrawn to a range of positions spaced from the said surface portions of the barrel towards the central axis by the rotor member upon rotation of the latter, the discs having shaped central apertures receiving the rotor member through them and accommodating movement of the full diametric range of movement of the crests of the said helical thread formation in a second diametric direction perpendicular to the said first diametric plane, and the rotor and sealing slide discs and the confronting surface of the barrel forming a series of pumping pockets between the convex outer edge portions of the sealing discs and the surface of the barrel which pumping pockets in normal operation are moved longitudinally through the pump to force the fluid medium to move toward the discharge end of the positive-displacement wave pump, characterised in that the spaces defined between the rotor and the surfaces of the said central apertures of the discs form further pumping pockets which in normal operation are moved longitudinally through the pump to force the fluid medium to move through the said central apertures towards the said discharge end.

2. A wave pump assembly as claimed in claim 1, wherein the barrel defines an elongate cylindrical bore, and which has a stator frame provided with cylindrical outer surface portion engaging and conforming to the surface of the cylindrical bore, the rotor being arranged for rotation in the stator frame.

3. A wave pump assembly as claimed in claim 2, wherein the means supporting the discs includes a pair of diametrically opposite side frame portions of the stator frame joining an inlet portion and extending substantially the axial length of the slide disc stack spaced transversely from the axis of the bore in the said second diametric direction and having inwardly facing guide surfaces in sliding contact with the slide discs to confine movement of the slide discs to reciprocative movement parallel to the said first diametric plane, and wherein the slide disc stack extends a major portion of the axial length of the stator frame.

4. A wave pump as claimed in claim 3, wherein the said guide surfaces of the said side frame portions are flat surfaces lying in a pair of planes paralleling the said first diametric plane and the said slidable sealing discs are in the shape of thin truncated circular discs each having a pair of opposite flat edge portions extending along chords of the notional circles defining the disc equally spaced from the centre of the disc and positioned in sliding contact with the guide surfaces of the said side frame portions to be guided thereby.

5. A wave pump assembly as claimed in any one of claims 2 to 4, wherein the stator frame has a cylindrical upstream end portion including a pair of opposite circumferential interruptions in the outer portion thereof in the direction of the said first diametric plane defining passages for admitting the fluid medium into the pocket formations defined between the outer curved edge portions of the discs and the confronting surface of the bore and having an upstream facing beveled throat and passages therefrom communicating with spaces between the central apertures of the discs and the helically contoured outer surface of the rotor member in the said second diametric direction for passage of the fluid medium through the portions of the central apertures of the discs not in sealing contact with the contoured outer surface of the rotor member.

6. A wave pump assembly as claimed in any one of claims 1 to 5, which comprises drive shaft means journalled for rotation about the axis of the bore, and wherein the means arranged to drive the rotor member comprises means coupling the rotor member to the discharge end portion of the drive shaft to be driven thereby.

7. A screw extruder assembly for plasticating or melting solid plastic material or the like, comprising a wave pump assembly as claimed in any one of claims 1 to 6, and a screw rotatably housed in an upstream portion of the bore having a feed end and a discharge end, the said screw having a section between the feed end and discharge end thereof comprising at least one helical thread having plural turns integral with the core of the screw, the said thread originating at the feed end of the screw creating a helical channel in the space between successive turns of the thread and having a minimum clearance to the surface of the bore to feed the plastic material along the screw from the feed end to the discharge end, the positive displacement wave pump being located between the discharge end of the screw and the outlet end of the bore.

8. A screw extruder assembly as claimed in claim 7, wherein the rotor member of the wave pump includes an axially short cylindrical upstream end portion to be removably assembled to the discharge end of the screw and having a downstream end portion of smaller diametric size than the diameter of the helically contoured rotor portion.

9. A screw extruder assembly as claimed in claim 6, wherein the said cylindrical upstream end portion is provided with an internally threaded socket formation opening through the upstream end thereof, the discharge end of the said screw is provided with an externally threaded end portion sized to interfit and be threadedly coupled in the said threaded socket of the rotor member, and a downstream end portion of the rotor member is of non-round cross-sectional configuration for receiving a similarly shaped tool portion for manually assembling and disassembling the rotor member with the screw.

10. A screw extruder assembly as claimed in any one of claims 6 to 9, wherein the said helical thread of the screw comprises at least one pair of substantially parallel, helical, first and second threads integral with the core of the screw, the first thread of the pair originating at the feed end of the screw creating a helical channel and having a minimum clearance to the surface of the bore, the second thread of the pair originating at a location about one third to two thirds of the length of the screw from the feed end of the screw by rising from the core of the screw and having a larger clearance to the surface of the bore comparable to or greater than the size of the components of said solid plastic material, the second thread of the pair dividing the helical channel created by the first thread into two sub-channels of substantially equal width, one located toward the feed end of the screw from the second thread and the other located toward the discharge end of the screw from the second thread, the depth of the sub-channel located toward the feed end gradually increasing to a maximum comparable to the depth of the helical channel at the feed end of the screw accompanied by gradual decrease of the depth of the other sub-channel to a minimum comparable to or greater than the size of the components of said solid plastic material.

**Patentansprüche**

1. Wellenförmige Pumpenanlage zum Pumpen eines Strömungsmediums, das Gase oder Flüssigkeiten oder Mischungen hiervon mit Feststoffen oder dergleichen umfaßt, mit einer Laufbüchse, die ein strömungsaufwärts gelegenes Ende und ein Auslaßende aufweist, und mit einer Verdränger-Wellenpumpe in der Bohrung, die zwischen dem strömungsaufwärts gelegenen Ende und dem Auslaßende liegt, worin die Pumpe ein Rotorteil mit einer eine schraubenlinienförmige Kontur aufweisenden Außenoberfläche, die eine mehrgängige schraubenlinienförmige Gewindegestalt mit breiter abgerundeter Form bildet, die um eine Mittelachse umläuft, Einrichtungen, die im Betrieb derart angeordnet sind, daß sie das Rotorteil in Drehung antreiben, einen aus einer Vielzahl von verschiebbaren, in Flächenberührung miteinander stehenden Dichtungsscheiben bestehendem Gleitscheibenstapel, der sich entlang der Wellenpumpe erstreckt, und Einrichtungen aufweist, die die Scheiben für eine in Hin- und Herrichtung erfolgende Gleitbewegung parallel zu einer ersten diametralen Ebene der Laufbüchse haltern, worin die Laufbüchse gegenüberliegende Oberflächenteile aufweist, die auf die Scheiben entlang der Erstreckung des Gleitscheibenstapels gerichtet sind, worin die Gleitscheiben Dichtungsscheiben mit einander entgegengesetzten Kantenflächenteilen bilden, die durch das Rotorteil bei dessen Drehung in Richtung auf die gegenüberliegenden Oberflächenteile der Laufbüchse in Dichtungseingriff hiermit bewegbar und auf einen Bereich von Positionen in Abstand von den Oberflächenteilen der Laufbüchse in Richtung auf die Mittelachse fort bewegbar sind, worin die Scheiben geformte Mittelöffnungen zur Aufnahme des Rotorteils und zur Aufnahme der Bewegung des vollen diametralen Bereiches der Bewegung der Spitzen der schraubenlinienförmigen Gewindegestalt in einer zweiten diametralen Richtung senkrecht zu der ersten diametralen Ebene aufweisen, und worin der Rotor und die Dichtungs-Gleitscheiben und die gegenüberliegende Oberfläche der Laufbüchse eine Reihe von Pumptaschen zwischen den konvexen äußeren Kantenteilen der Dichtungsscheiben und der Oberfläche der Laufbüchse bilden, wobei diese Pumptaschen im Normalbetrieb in Längsrichtung durch die Pumpe bewegt werden, um das Strömungsmedium in Richtung auf das Auslaßende der Verdränger-Wellenpumpe zu drücken, dadurch gekennzeichnet, daß die zwischen dem Rotor und den Oberflächen der Mittelöffnungen der Scheiben umgrenzten Räume weitere Pumptaschen bilden, die im Normalbetrieb in Längsrichtung durch die Pumpe hindurchbewegt werden, um dem Strömungsmedium eine Bewegung durch die Mittelöffnungen in Richtung auf das Auslaßende aufzuzwingen.

2. Wellenförmige Pumpenanlage nach Anspruch 1, worin die Laufbüchse eine langgestreckte zylindrische Bohrung umgrenzt und die einen Statorrahmen aufweist, der mit einem zylindrischen Außenoberflächenteil versehen ist, der mit der Oberfläche der zylindrischen Bohrung in Eingriff steht und in seiner Form mit dieser übereinstimmt, wobei der Rotor für eine Drehung in dem Statorrahmen ausgebildet ist.

3. Wellenförmige Pumpenanlage nach Anspruch 2, worin die die Scheiben halternde Einrichtung zwei diametral gegeüberliegende Seitenrahmenteile des Statorrahmens einschließt, die an einem Einlaßteil miteinander verbunden sind und sich im wesentlichen über die axiale Länge des Gleitscheibenstapels erstrecken sowie mit Querabstand von der Achse der Bohrung in der zweiten diametralen Richtung angeordnet sind und nach innen gerichtete Führungsflächen aufweisen, die in Gleitberührung mit den Gleitscheiben stehen, um die Bewegung der Gleitscheiben auf eine Hin- und Herbewegung parallel zu der ersten diametralen Ebene zu beschränken, und worin sich der Gleitscheibenstapel über einen größeren Teil der axialen Länge des Statorrahmens erstreckt.

4. Wellenförmige Pumpenanlage nach Anspruch 3, worin die Führungsflächen der Seitenrahmenteile ebene Oberflächen sind, die in zwei Ebenen liegen, die parallel zur ersten diametralen Ebene verlaufen und worin die Dichtungs-Gleitscheiben die Form von dünnen abgeflacht kreisförmigen Scheiben aufweisen, die jeweils zwei entgegengesetzt angeordnete flache Kantenteile aufweisen, die sich entlang von Sehnen von gedachten, die Scheiben umgrenzenden Kreisen erstrecken, einen gleichförmigen Abstand von dem Mittelpunkt der Scheibe aufweisen und so angeordnet sind, daß sie in Gleitberührung mit den Führungsflächen der Seitenrahmenteile stehen, um von diesen geführt zu werden.

5. Wellenförmige pumpenanlage nach einem der Ansprüche 2-4, worin der Statorrahmen einen zylindrischen strömungsaufwärts gelegenen Endteil, der in seinem Außenteil zwei entgegengesetzte Unterbrechungen am Umfang in der Richtung der ersten diametralen Ebene einschließt, die Kanäle für den Einlaß des Strömungsmediums in die Taschenbildungen umgrenzen, die zwischen den äußeren gekrümmten Kantenteilen der Scheiben und der gegenüberliegenden Oberfläche der Bohrung definiert sind, worin diese Kanäle eine strömungsaufwärts gerichtete abgeschrägte Mündung und davon ausgehende Kanäle aufweist, die mit den Zwischenräumen zwischen den Mittelöffnungen der Scheiben und der schraubenlinienförmig gestalteten Außenoberfläche des Rotorteils in der zweiten diametralen Richtung für den Durchgang des Strömungsmediums durch die Teile der Mittelöffnungen der Scheiben in Verbindung stehen, die nicht in Dichtungsberührung mit der schraubenlinienförmig gestalteten Außenoberfläche des Rotorteils stehen.

6. Wellenförmige Pumpenanlage nach einem der Ansprüche 1-5, die Antriebswelleneinrichtungen umfaßt, die für eine Drehung um die Achse der Bohrung drehbar gelagert sind, und worin die zum Antrieb des Rotorteils ausgebildeten Einrichtungen Einrichtungen umfassen, die das Rotorteil mit dem auslaßseitigen Endteil der Antriebswelle koppeln, um von dieser angetrieben zu werden.

7. Schneckenpressenbaugruppe zur Plastizierung oder zum Schmelzen von festem Kunststoffmaterial oder dergleichen, mit einer wellenförmigen Pumpenanlage nach einem der Ansprüche 1-6, mit einer Schnecke, die drehbar in einem strömungsaufwärts gelegenen Teil der Bohrung angeordnet ist und ein Zuführungsende und ein Auslaßende aufweist, worin die Schnecke einen Abschnitt zwischen ihrem Zuführungsende und ihrem Auslaßende aufweist, der zumindestens ein schraubenlinienförmiges Gewinde mit mehreren Windungen umfaßt, die einstückig mit dem Kern der Schnecke ausgebildet sind, worin das Gewinde von dem Zuführungsende der Schnecke ausgeht und einen schraubenlinienförmigen Kanal in dem Abstand zwischen aufeinanderfolgenden Windungen des Gewindes bildet und einen minimalen Abstand zur Oberfläche der Bohrung aufweist, um das Kunststoffmaterial entlang der Schnecke von dem Zuführungsende zum Auslaßende zu transportieren, wobei die Verdränger Wellenpumpe zwischen dem Auslaßende der Schnecke und dem Auslaßende der Bohrung angeordnet ist.

8. Schneckenpressenbaugruppe nach Anspruch 7, dadurch gekennzeichnet, daß das Rotorteil der Wellenpumpe einen in Axialrichtung kurzen, zylindrischen, strömungsaufwärts gelegenen Endteil einschließt, der lösbar mit dem Auslaßende der Schnecke verbunden ist und einen strömungsabwärts gelegenen Endteil mit kleineren diametralen Abmessungen als der Durchmesser des schraubenlinienförmig gestalteten Rotorteils aufweist.

9. Schneckenpressenbaugruppe nach Anspruch 6, worin der zylindrische, strömungsaufwärts gelegene Endteil mit einer mit Innengewinde versehenen Buchsengestalt versehen ist, die sich durch dessen strömungsaufwärts gelegenes Ende öffnet, worin das Auslaßende der Schnecke mit einem mit Außengewinde versehenen Endteil versehen ist, der so bemessen ist, daß er in die Gewindebuchse des Rotorteils paßt und mit dieser durch Verschrauben gekoppelt ist, und worin ein strömungsabwärts gelegener Endteil des Rotorteils eine unrunde Querschnittsform zur Aufnahme eines in gleicher Weise geformten Werkzeugteils aufweist, um das Rotorteil von Hand mit der Schnecke zusammenzubauen und von dieser trennen zu können.

10. Schneckenpressenbaugruppe nach einem der Ansprüche 6-9, worin das schraubenlinienförmige Gewinde der Schnecke mindestens ein Paar von im wesentlichen parallelen, schraubenlinienförmigen ersten und zweiten Gewinden umfaßt, die einstückig mit dem Kern der Schnecke ausgebildet sind, wobei das erste Gewinde des Paares von dem Zuführungsende der Schnecke ausgeht, einen schraubenlinienförmigen Kanal bildet und einen minimalen Abstand zu der Oberfläche der Bohrung aufweist, während das zweite Gewinde des Paares von einer Stelle bei ungefähr einem Drittel bis zwei Dritteln der Länge der Schnecke von dem Zuführungsende der Schnecke dadurch ausgeht, daß es von dem Kern der Schnecke ansteigt und einen größeren Abstand zu der Oberfläche der Bohrung vergleichbar mit oder größer als die Größe der Bestandteile des festen Kunststoffmaterials aufweist, worin das zweite Gewinde des Paares den durch das erste Gewinde geschaffenen schraubenlinienförmigen Kanal in zwei Teilkanäle mit im wesentlichen gleicher Breite unterteilt, von denen einer bezogen auf das zweite Gewinde in Richtung auf das Zuführungsende der Schnecke liegt, während der andere Kanal bezogen auf das zweite Gewinde in Richtung auf das Auslaßende der Schnecke liegt, worin die Tiefe des in Richtung auf das Zuführungsende liegenden Teilkanals graduell auf ein Maximum ansteigt, das mit der Tiefe des schraubenlinienförmigen Kanals an dem Zuführungsende der Schnecke vergleichbar ist, bei gleichzeitiger Abnahme der Tiefe des anderen Teilkanals auf ein Minimum, das vergleichbar mit oder größer als die Größe der Bestandteile des festen Kunststoffmaterials ist.

## Revendications

1. Ensemble à pompe ondulatoire pour pomper des fluides gazeux ou liquides, ou des mélanges de tels fluides avec des solides ou analogues, comprenant, à l'état assemblé, un carter tubulaire avec une extrémité amont et une extrémité de sortie et une pompe volumétrique à mouvement ondulatoire, située dans l'alésage du carter entre l'extrémité amont et l'extrémité de sortie, dans lequel la pompe possède un rotor avec une surface extérieure de profil hélicoïdal, définissant un filet hélicoïdal à plusieurs spires de forme très arrondie, destiné à tourner autour d'un axe central, un moyen pour tourner le rotor pendant le fonctionnement, un empilage de disques d'étanchéité disposés coulissants les uns par rapport aux autres par leurs faces mutuellement en contact, empilage qui s'étend tout au long de la pompe, ainsi qu'un moyen supportant les disques de manière qu'ils puissent effectuer des mouvements alternatifs de coulissement parallèlement à un premier plan diamétral du carter, lequel possède des portions de surface antagonistes, situées en regard des disques sur toute l'étendue de l'empilage, les disques coulissants d'étanchéité possédant des portions de tranche opposées destinées à être déplacées vers les portions de surface antagonistes situées en regard d'elles du carter pour être appliquées de façon étanche contre elles, ainsi qu'à être écartées jusqu'à une gamme de positions espacées de ces portions de surface du carter, en direction de l'axe central, par le rotor, lorsque celui-ci tourne, les disques présentant des ouvertures centrales de forme déterminée, au travers desquelles passe le rotor et qui permettent toute la plage diamétrale de mouvement des crêtes du filet hélicoïdal suivant une seconde direction diamétrale perpendiculaire au premier plan diamétral, le rotor, les disques d'étanchéité coulissants et la surface antagoniste du carter formant une série de poches de pompage entre les parties extérieures convexes des bords des disques et la surface du carter, poches de pompage qui, pendant le fonctionnement normal, sont déplacées longitudinalement à travers la pompe, de manière que le fluide soit forcé de se déplacer vers l'extrémité de décharge de la pompe volumétrique à mouvement ondulatoire, caractérisé en ce que les espaces définis entre le rotor et les surfaces des ouvertures centrales des disques forment des poches de pompage supplémentaires qui, pendant le fonctionnement normal, sont déplacées longitudinalement à travers la pompe, de manière que le fluide soit forcé de se déplacer à travers ces ouvertures centrales vers l'extrémité de décharge.

2. Ensemble à pompe selon la revendication 1, dans lequel le carter définit un alésage cylindrique de forme allongée et qui possède un stator avec une surface extérieure cylindrique en contact avec et épousant la forme de l'alésage cylindrique, le rotor étant disposé rotatif dans le stator.

3. Ensemble à pompe selon la revendication 2, dans lequel le moyen supportant les disques comporte deux parties latérales diamétralement opposées du stator, parties qui sont réunies dans une zone d'entrée et s'étendent sensiblement sur toute la longueur axiale de l'empilage de disques coulissants, en étant espacées transversalement de l'axe de l'alésage suivant la seconde direction diamétrale, lesdites parties latérales du stator comportant des surfaces de guidage dirigées vers l'intérieur et en contact de glissement avec les disques pour limiter le mouvement des disques à un mouvement alternatif parallèle au premier plan diamétral, et dans lequel l'empilage de disques s'étend sur une grande partie de la longueur axiale du stator.

4. Ensemble à pompe selon la revendication 3, dans lequel les surfaces de guidage des parties latérales du stator sont des surfaces planes situées en deux plans parallèles au premier plan diamétral et les disques d'étanchéité coulissants sont des disques minces de forme circulaire tronquée, chaque disque possédant deux portions de tranche opposées planes, s'étendant suivant des cordes du cercle fictif définissant le disque, ces portions de tranche planes se trouvant à égale distance du centre du disque et étant en contact de coulissement avec les surfaces de guidage des parties latérales du stator pour être guidées par elles.

5. Ensemble à pompe selon l'une quelconque des revendications 2 à 4, dans lequel le stator comporte une extrémité amont cylindrique avec, dans la partie extérieure deux interruptions circonférentielles opposées qui s'étendent dans la direction du premier plan diamétral et définissent des passages pour l'admission du fluide dans les poches définies entre les portions courbes des bords extérieurs des disques et la surface antagoniste de l'alésage, de même qu'une surface conique de rétrécissement, dirigée vers le côté amont, et des passages partant de cette surface et communiquant avec des espaces compris entre les bords des ouvertures centrales des disques et la surface extérieure de profil hélicoïdal du rotor, dans la seconde direction diamétrale, pour le passage du fluide à travers les parties des ouvertures centrales des disques qui ne sont pas en contact d'étanchéité avec la surface extérieure profilée du rotor.

6. Ensemble à pompe selon l'une quelconque des revendications 1 à 5, comprenant un arbre d'entraînement monté rotatif autour de l'axe de l'alésage du carter, et dans lequel le moyen pour tourner le rotor est constitué par un moyen d'accouplement entre l'extrémité de sortie de l'arbre d'entraînement et le rotor.

7. Ensemble à extrudeuse à vis pour la plastification ou la fusion de matières plastiques à l'état solide ou de matières semblables, comprenant, à l'état assemblé, un ensemble à pompe ondulatoire selon l'une quelconque des revendications 1 à 6, ainsi qu'une vis montée rotative dans une partie amont de l'alésage du carter et présentant une extrémité d'alimentation et une extrémité de décharge, une section de la vis située entre son extrémité d'alimentation et son extrémité de décharge comprenant au moins un filet hélicoïdal à plusieurs spires et d'un seul tenant avec le noyau de la vis, ce filet commençant à l'extrémité d'alimentation de la vis, créant un canal hélicoïdal dans l'espace compris entre les spires successives du filet et présentant un jeu minimal par rapport à la surface de l'alésage, en vue du transport de la matière plastique le long de la vis à partir de l'extrémité d'alimentation jusqu'à l'extrémité de décharge, la pompe volumétrique à mouvement ondulatoire étant située entre l'extrémité de décharge de la vis et l'extrémité de sortie de l'alésage du carter.

8. Ensemble à extrudeuse selon la revendication 7, dans lequel le rotor de la pompe ondulatoire comporte une extrémité amont cylindrique de faible longueur axiale, qui est conçue pour pouvoir être reliée de façon détachable à l'extrémité de décharge de la vis, de même qu'une extrémité aval de plus petite dimension diamétrale que le diamètre du rotor à profil hélicoïdal.

9. Ensemble à extrudeuse selon la revendication 8, dans lequel l'extrémité amont cylindrique possède un trou fileté qui s'ouvre côté amont et l'extrémité de décharge de la vis possède un bout fileté extérieurement et dimensionné pour pouvoir être vissé dans le trou fileté du rotor, une portion extrême côté aval du rotor ayant une configuration non circulaire en section, en vue de la réception d'une partie de forme semblable d'un outil servant à l'assemblage et à la séparation manuels du rotor et de la vis.

10. Ensemble à extrudeuse selon l'une quelconque des revendications 6 à 9, dans lequel le filet hélicoïdal de la vis est constitué d'au moins deux filets hélicoïdaux sensiblement parallèles, un premier et un second, qui sont d'un seul tenant avec le noyau de la vis, le premier filet commençant à l'extrémité d'alimentation de la vis, créant un canal hélicoïdal et présentant un jeu minimal par rapport à la surface de l'alésage du carter, le second filet commençant à un endroit situé à environ un tiers jusqu'à deux tiers de la longueur de la vis à partir de l'extrémité d'alimentation de celle-ci, endroit où ce filet s'élève à partir du noyau de la vis, le jeu du second filet par rapport à la surface de l'alésage étant plus grand et étant comparable ou supérieur à la grandeur des composants de la matière plastique solide, le second filet partageant le canal hélicoïdal créé par le premier filet en deux sous-canaux de largeur sensiblement égale, l'un étant situé du côté de l'extrémité d'alimentation de la vis, à partir du second filet, et l'autre étant situé du côté de l'extrémité de décharge de la vis, à partir du second filet, la profondeur du sous-canal situé du côté d'alimentation augmentant graduellement jusqu'à un maximum comparable à la profondeur du canal hélicoïdal à l'extrémité d'alimentation de la vis, cette augmentation étant accompagnée d'une diminution graduelle de la profondeur de l'autre sous-canal, jusqu'à un minimum comparable ou supérieur à la grandeur des composants de la matière plastique solide.

Fig-1

Fig-4   Fig-2   Fig-5

Fig-3

EP 0 184 938 B1

EP 0 184 938 B1

Fig-6

Fig-7

Fig-8A

Fig-8B

Fig-8C

Fig-9

Fig-10

Fig-11

Fig-12A

Fig-12C

Fig-12B

Fig-13

Fig-14

EP 0 184 938 B1